# EUROPEAN PATENT SPECIFICATION

(11) **EP 4 011 808 B1**
(45) Date of publication and mention of the grant of the patent: **29.11.2023**
(21) Application number: 21214230.1
(22) Date of filing: 14.12.2021
(51) Int. Cl.: B65G 47/08, B65B 35/04, B65G 47/252, B65G 54/02, B65B 23/14, B65B 35/44, B65B 35/36, B65B 57/14, B65B 57/20

(54) **APPARATUS FOR MOVING AND GROUPING FLAT PRODUCTS**
VORRICHTUNG ZUM BEWEGEN UND GRUPPIEREN VON FLACHEN PRODUKTEN
APPAREIL POUR DÉPLACER ET REGROUPER DES PRODUITS PLATS

(30) Priority: 14.12.2020 IT 202000030641
(43) Date of publication of application: 15.06.2022
(73) Proprietor: SPS Italiana Pack Systems S.p.A., 36036 Torrebelvicino (VI) (IT)
(72) Inventor: MASINI, Fabio, I-28047 OLEGGIO (Novara) (IT); BICELLI, Marco, I-28010 BOGOGNO (Novara) (IT)
(74) Representative: Savoca, Agatino

(56) References cited:
- EP-A1- 0 979 787
- EP-A1- 3 620 411
- WO-A1-2014/012913
- DE-A1- 19 917 655
- JP-A- 2017 071 479
- US-A- 5 035 315
- US-A- 5 311 722
- US-B2- 9 327 855

## Description

This invention relates to an apparatus for moving and grouping flat products, particularly cookies, having a perimeter edge and two main faces.

Said apparatuses are typically used to transport products, for example from a production station, and to form groups consisting of a predetermined number of said products to be sent to a packaging station.

US 5 035 315, which discloses the features of the preamble of claim 1, describes an apparatus for use in a production line for products such as cookies. Said apparatus comprises a first guide for advancing the products, a transfer device, and a second guide adapted to receive the products once they are unloaded from the transfer device.

JP 2017 071 479 describes the use of linear motors located below a guiding surface to enable the flexible grouping of products.

EP 979787 describes an apparatus comprising two separate side-by-side conveyors, each having a series of cells, a cross-feeder to deliver products to the cells, and a control system to coordinate the speeds of the conveyors and the feeder.

An object of this invention is to provide an improved apparatus with respect to those belonging to the prior art, particularly with respect to flexibility of use and increased production rate.

According to the invention, this object is achieved by an apparatus comprising:
- a first guide to which a conveyor device is associated to advance said products along a direction,
- a transfer device placed downstream of a terminal end of the first guide and rotatably mounted about an axis transversal to said direction of advancement, said transfer device being provided with rotation driving means and having at least one seat suitable for housing one of said products,
- a second guide arranged downstream of said transfer device, having a bottom wall with a longitudinal slot and suitable to receive said products, once they are unloaded from the transfer device, and
- a linear motor including a closed loop stator having a length located below said second guide, and a plurality of trolleys moving independently of one another along said stator, said trolleys having a pin protruding through said longitudinal slot, resulting in the formation of groups of products on said second guide, wherein said transfer device is provided with means for selectively moving said trolleys so as not to interfere, if desired, with the transfer of products from the first guide to the second guide.

Preferred features of the apparatus of the invention are described in the claims that are dependent on claim 1.

A further subject of this invention is a method for moving and grouping flat products using the aforesaid apparatus.

Advantageously, the use of independently movable trolleys makes it possible to transfer products from the first to the second guide in accordance with the most diverse requirements of use, also managing to overcome any discrepancies and anomalies in the flow of products fed by the first guide.

In particular, the apparatus of the invention may, as a result of performing simple rearrangement operations, form groups of products of very different configurations, such as groups of products that rest on a portion of their perimeter edge and lie in a respective vertical, or side-by-side, plane, i.e., groups or stacks of products with a vertical axis, wherein each product lies in a respective horizontal plane.

Further advantages and features of this invention will become apparent from the following detailed description, given by way of non-limiting example with reference to the accompanying drawings, wherein:
Fig. 1 is a schematic side elevation view of an apparatus according to the invention,
Fig. 2 is an enlarged scale view of a detail of the apparatus in Fig. 1,
Fig. 3 is a perspective view of two trolleys of a linear motor that is part of the apparatus in Fig. 1,
Fig. 4 is a side elevation view of one of the trolleys in Fig. 3,
Fig. 5 is a front view of the motor in Fig. 4,
Fig. 6 is a sectional view according to the line IV-IV in Fig. 1, with parts omitted,
Fig. 7 is a side elevation view of the detail illustrated in Fig. 6,
Fig. 8A through 8D schematically illustrate successive stages of operation of the apparatus,
Fig. 9 is a view corresponding to Fig. 6 of a rearrangement of the apparatus according to the invention, and
Fig. 10A through 10D schematically illustrate successive stages of operation of the apparatus as illustrated in Fig. 9.

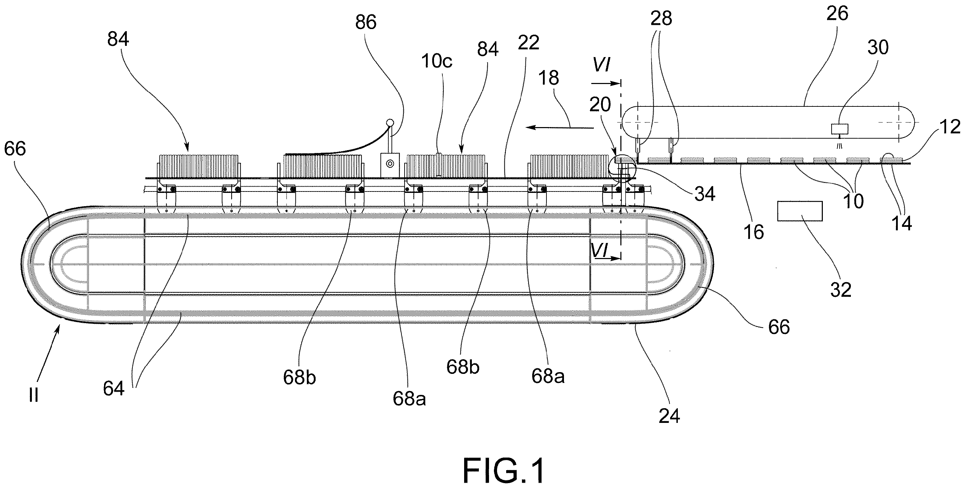

Fig. 1 shows an apparatus for moving and grouping flat products 10, in particular cookies, having a perimeter edge 12 and two main faces 14.

The apparatus comprises a first guide 16 to which is associated a conveyor device for advancing the products 10 along a direction of advancement 18, a transfer device 20 located downstream of an end of the first guide 16, a second guide 22 arranged downstream of the transfer device 20 and adapted to receive the products 10 unloaded by said transfer device, and a linear motor including a closed-loop stator 24 located below the second guide 22.

The conveyor device is per se conventional and comprises a movable, ring-shaped member 26 from which a plurality of lugs 28 protrudes transversely, each of which pushes a product 10 along the first guide 16, to which a photocell 30 is associated to check the actual presence of the products 10. The photocell 30 transmits the data related to the presence of said products to a unit 32 for controlling the operation of the apparatus.

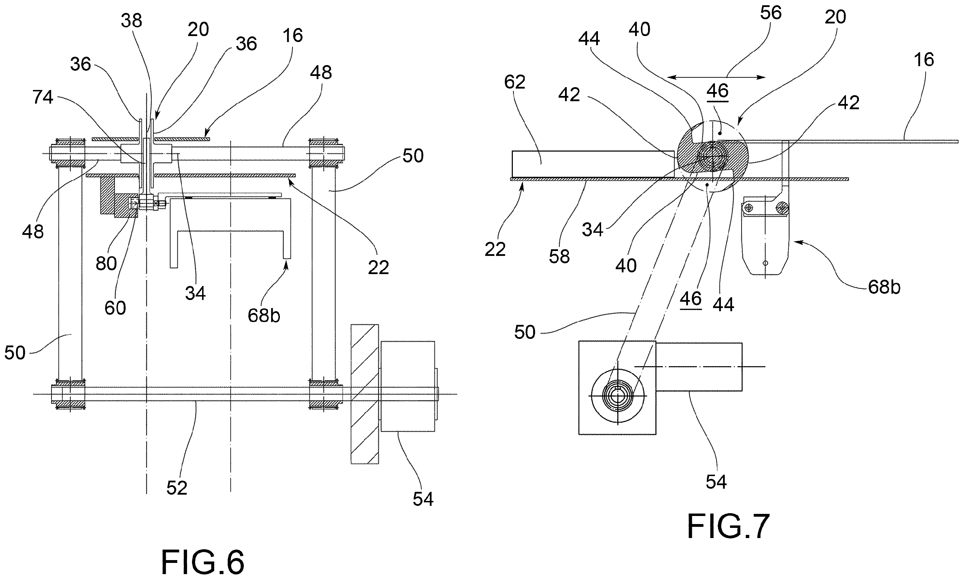

The transfer device 20 (Fig. 6 and 7) is rotatably mounted about an axis 34 transversal to the direction of advancement 18 and is formed of two plates 36 spaced apart from each other and parallel so as to define a gap 38. Each plate 36 has a central body delimited by two straight and parallel sides 40, which are joined by two curved portions 42 extending into a respective tooth 44 that delimits, together with one of the straight sides 40, a seat 46 suitable to house one of the products 10.

From a face of each plate 36 opposite the gap 38 a rotating drive shaft 48 departs, which is connected by a respective transmission belt 50 to an output shaft 52 of a single motor 54, such that the rotation of the two plates 36 is perfectly synchronous.

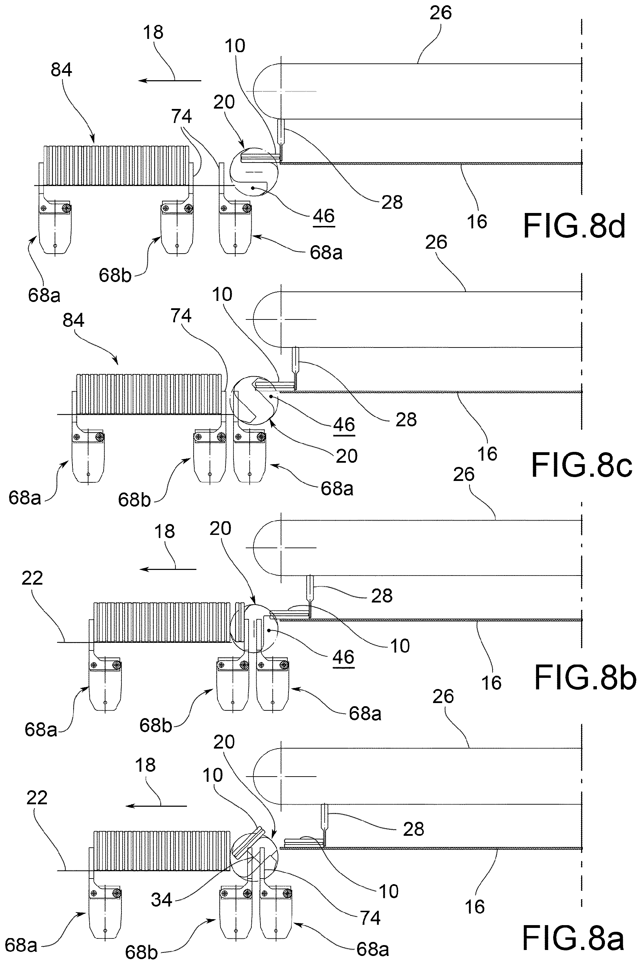

The transfer device 20 is further provided with adjustment means that allow its positioning between the two guides 16, 22 to be adjusted along a horizontal axis (see arrow 56 in Fig. 8) orthogonal to the direction of advancement 18, so as to accommodate products 10 of different sizes.

The second guide 22 is located at a level lower than the level of the first guide 16 and is a kind of extension of said guide, since the guides 16, 22, as well as the device 20, lie in a common, vertically oriented general plane. The second guide 22 has a U-shaped cross section formed by a bottom wall 58 having a longitudinal slot 60 and two facing side walls 62 delimiting a longitudinal cavity suitable to receive the products 10, once unloaded by the transfer member 20, as will be detailed in the following description of operation.

The linear motor is known per se and includes a stator 24 conventionally formed by a series of magnets arranged along a closed circuit comprising two straight lengths 64, i.e., an upper forward length located below the back wall 58 on the second guide 22 and a lower return length, which are parallel to one another in a vertical plane, and two semicircular portions 66 that join the ends of the straight lengths 64.

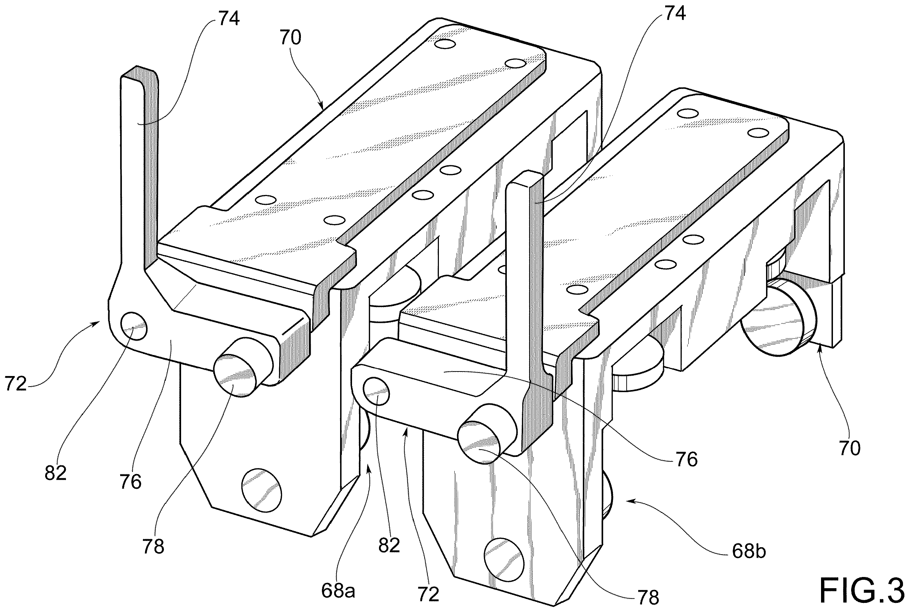

The linear motor further comprises (Fig. 3-5) a plurality of trolleys 68a, 68b that house respective magnets and are thus movable independently of each other along the stator 24 due to the forces generated by the magnetic fields of said stator on their magnets.

Each trolley 68a, 68b has a body 70 having a cross section shaped as an inverted U. On one side of the body 70 an L-shaped member 72 is hinged, which has a vertical arm or pin 74, and a horizontal arm 76 from one rear end of which (with reference to the direction of advancement along the forward length 64) a cam 78 transversely protrudes, which engages a groove 80 made along the stator 24. In the trolleys 68a, 68b that follow one another on the stator 24, the respective members are alternately mounted with the horizontal arm 76 following (trolley 68a) or preceding (trolley 68b) the respective pin or vertical arm 74. In the first case, the member 72 is hinged to the body 70 about an axis 82 orthogonal to the direction of advancement at the intersection of the arms 74, 76, while in the second case, the member 72 is pivoted on the body 70 about an axis 82 orthogonal to the direction of advancement 18 at the distal end of the horizontal arm 76. The pins 74 of both types of trolley 68a, 68b protrude (Fig. 6) through the slot 60 of the second guide 22, alternately acting as a front retainer or a rear pusher of a group 84 of products 10 along the second guide 22, as will be detailed in the following description of operation.

A flexible blade device 86, which is suitable to regulate the mutual positioning of the products 10, is located above the second guide 22 (Fig. 1).

The operation of the apparatus described above is as follows:
The lugs 28 of the conveyor device 20 push the products 10 along the first guide 16 according to the direction of advancement 18, one of the main faces 14 of said products resting on the guide 16 and therefore having a horizontal configuration, until said products pass one by one into one of the seats 46 of the transfer device 20 (Fig. 8A).

The rotation of said transfer device about the axis 34 causes the transfer of each product 10 from the seat 46 into the second guide 22, so that a portion of their perimeter edge 12 rests on a back wall 58 of the said guide (Fig. 8B). The products 10 assume therefore a vertical or side-by-side configuration, wherein they are in contact over an entire main face 14 with each adjacent product 10, forming a stack with a horizontal axis.

At the same time, the trolleys 68a, 68b, controlled by the control unit 32, circulate along the stator 24, such that (Fig. 6) their respective pins 74 pass through the gap 38 between the plates 36 of the transfer device 20, and then protrude through the slot 60 of the bottom wall 58 of the second guide 22, when the trolleys 68a, 68b travel along the forward length 64 of the stator 24.

The motion of each trolley 68a, 68b is not uniform, but rather is controlled in a desired manner by the unit 32: in particular, when on the initial portion of the second guide 22 the number of products 10 desired to form a group 84 has been unloaded, the unit 32 controls (Fig. 8C) the advancement on the initial portion of the forward length 64 of a trolley 68b having the horizontal arm 76 preceding the pin 74, which thus acts as a rear pusher of the group 84 of products 10. Immediately thereafter, the unit 32 controls (Fig. 8D) the advancement on the initial portion of the length 64 of a trolley 68a with the horizontal arm 76 following the pin 74 and acts as a front retainer of a further group 84 of products 10 that will subsequently be unloaded one by one on the second guide 22, assuming a vertical or side-by-side configuration. The products 10 from time to time unloaded by the transfer device 20 on the second guide 22 would in fact tend to assume again a horizontal configuration, although turned by 180° with respect to the one assumed on the first guide 16; however, the presence of the pin 74 of the trolley 68a acting as a retainer holds them in a vertical configuration.

The trolleys 68a, 68b are not only movable independently of each other, but rather their movement may be instantly modified by the control unit 32 to compensate for any anomalies and unexpected events. For example, it is possible for the supply of the products 10 from the first guide 16 to be irregular, and therefore the photocell 30 signals that one or more of said products are missing. In such a case, the unit 32 will command the entry of a pusher trolley 68b on the forward length 64 of the stator 24, only when the number of products 10 actually unloaded on the initial portion of the second guide 22 corresponds to the desired number.

During the route along the second guide 22 of the groups 84 of products 10 gradually formed, the unit 32 may advantageously control a slight increase in the distance existing between the trolleys 68a, 68b acting respectively as a retainer and a pusher of the same group 84, suitably varying their speeds. In this way, the action of the flexible blade device 86 is facilitated, which regularizes the height positioning of the various products 10 of a group 84, aligning those (see product 10c in Fig. 1) of which the initial positioning on the second guide 22 does not conform to the one desired.

Lastly, when the groups 84 reach the end of the second guide 22, they are unloaded at a packaging station that is per se conventional and not shown in the figures.

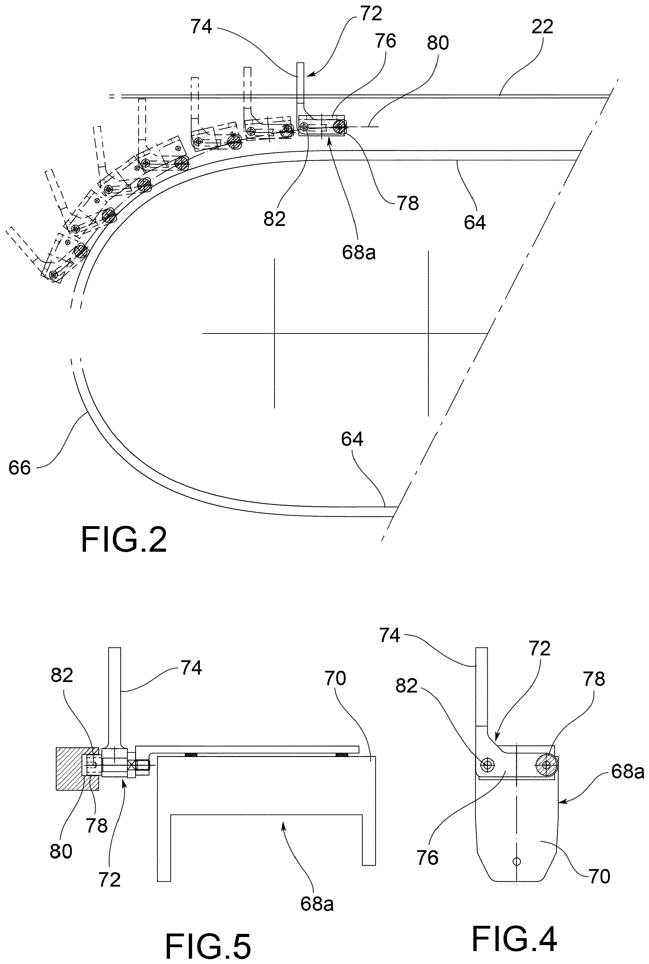

To avoid damaging the products 10 during this unloading step (Fig. 2), the L-shaped member 72 of each trolley 68a, 68b rotates about its respective axis 82 due to the engagement existing between its cam 78 and the groove 80 made along the stator 24. In this way, the pins 74 gently accompany the movement of the respective group 84 of products 10, preventing jolting and violent shocks.

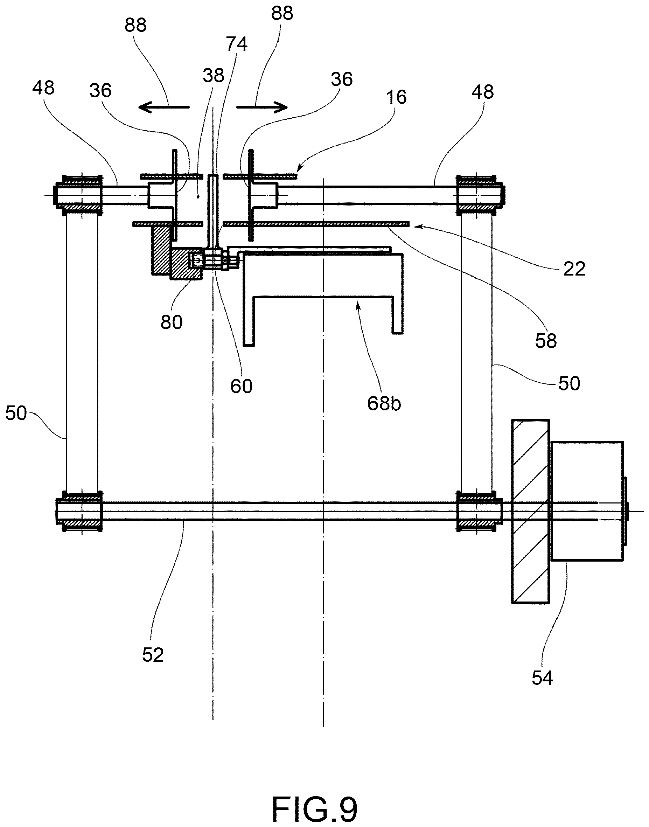

Fig. 9, wherein the same numbers as those used previously distinguish parts identical or equivalent to those previously described, schematically shows a set-up variant of the apparatus described above, which is rearranged differently by changing the position of some components.

Specifically, the output shaft 52 of the motor 54 has a telescopic structure, being, for example, formed of two interconnected half-parts having a polygonal cross section, so that, if desired, it may be extended by sliding one half-part relative to the other and subsequently locking them once the desired extension is reached. As a result, the plates 36 of the transfer device 20 move apart (see arrows 88 in Fig. 9), while the width of the gap 38 existing between them is likewise increased, so that the device 20 does not interfere in the passage of the products from the first guide 16 to the second guide 22, which occurs simply by falling.

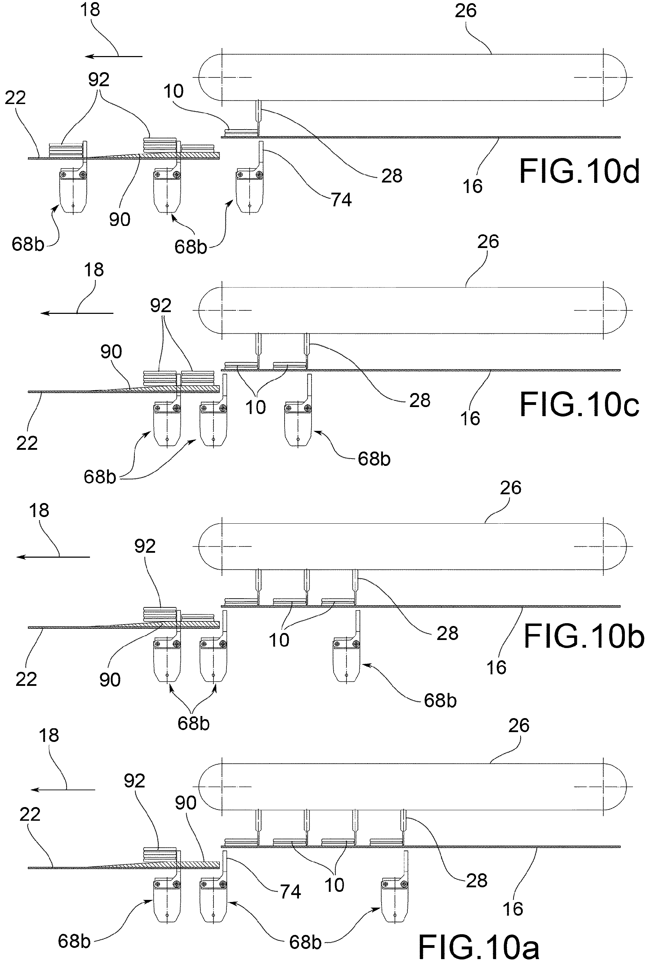

The manner of operation of the apparatus in this configuration is shown in Fig. 10A through 10D.

As may be seen, the products 10 are unloaded directly from the first guide 16 onto the second guide 22, on the initial portion of which an inclined platform 90 has been placed, maintaining the same horizontal configuration. The products 10 may thus be stacked, forming vertical-axis stacks 92, which, upon reaching the desired number of products 10 (e.g., equal to two in Fig. 10A-D), are pushed by the pin 74 of a respective trolley 68b along the second guide 22 toward a packaging station not shown.

Of course, without prejudice to the principle of the invention, the details of implementation and the embodiments may vary widely with respect to that which has been described purely by way of example, without thereby departing from the scope of the invention as defined in the appended claims.

## Claims

1. An apparatus for moving and grouping flat products (10) having two main faces (14) and a perimeter edge (12), comprising:
- a first guide (16) to which a conveyor device (20) is associated in order to advance said products (10) along a direction of advancement (18),
- a transfer device (20) located downstream of a terminal end of the first guide (16) and rotatably mounted about an axis (34) transversal to said direction of advancement (18), said transfer device (20) being provided with rotation driving means and having at least one seat (46) suitable for housing one of said products (10), and
- a second guide (22) arranged downstream of said transfer device (20), having a bottom wall (58) with a longitudinal slot (60) and being adapted to receive said products (10), once unloaded from the transfer device (20),
**characterized in that**, the apparatus further comprises
- a linear motor including a closed loop stator (24) having a length (64) located below the second guide (22), and a plurality of trolleys (68a, 68b) movable independently from each other along the stator (24), said trolleys (68a, 68b) having a pin (74) which protrudes through said longitudinal slot (60), bringing about the formation of groups (84, 92) of products (10) on said second guide (22),
wherein said transfer device (20) is selectively movable so as not to interfere, if desired, with the transfer of products (10) from the first guide (16) to the second guide (22).

2. The apparatus according to claim 1, wherein said first guide (16) is located at a level higher than the level of the second guide (22), which has a U-shaped cross-section formed by the bottom wall (58) with said longitudinal slot (60) and two facing side walls (62) which delimit a longitudinal cavity suitable for receiving said products (10), once unloaded from the transfer device (20).

3. The apparatus according to any of the preceding claims, wherein said transfer device (20) is formed by two spaced and parallel plates (36) so as to define therebetween a gap (38) suitable for allowing the passage of the pins (74) of the trolleys (68a, 68b), each plate (36) having a central body delimited by two straight and parallel sides (40), which are joined by two curved lengths (42) extending into a respective tooth (44) which together with one of the straight sides (40) delimits a seat (46) suitable for housing one of said products (10).

4. The apparatus according to claim 3, wherein a respective drive shaft (48), connected by a respective transmission belt (50) to an output shaft (52) of a single motor (54), departs from a face of each plate (36) facing away from said gap (38).

5. The apparatus according to any of the preceding claims, wherein said transfer device (20) is rotatably mounted about an axis (34) transversal with respect to the direction of advancement (18) and is formed by two plates (36) spaced apart and parallel so as to define a gap (38), a rotating drive shaft (48) departing from one face of each plate (36) opposite to the gap (38), connected by a respective drive belt (50) to an output shaft (52) of a single motor (54), which output shaft (52) has a telescopic structure.

6. The apparatus according to claim 5, wherein said output shaft (52) is formed of two interconnected half-parts having a polygonal cross section, so that, if desired, it may be extended.

7. The apparatus according to any of the preceding claims, wherein said transfer device (20) is provided with adjusting means for adjusting its positioning between said guides (16, 22) along a horizontal axis orthogonal to the direction of advancement (18), so as to adapt to products (10) of different sizes.

8. The apparatus according to any of the preceding claims, wherein said first guide (16) is associated with a photocell (30) for checking the presence of said products (10).

9. The apparatus according to any of the preceding claims, wherein said second guide (22) is associated with a device (86), preferably a flexible blade, suitable to adjust the mutual positioning of the products (10) of a group (84).

10. The apparatus according to any of the preceding claims, wherein each of said trolleys (68a, 68b) has a body (70) having a cross section shaped as an inverted U, on one side of which an L-shaped member (72) is hinged, which has a vertical arm constituted by said pin (74) and a horizontal arm (76) from which a cam (78) transversely protrudes, said L-shaped member (72) being hinged on said body (70) at an end of the horizontal arm (76).

11. A method for moving and grouping flat products (10) having two main faces (14) and a perimeter edge (12), which involves using an apparatus according to any of the preceding claims.

12. The method according to claim 11, comprising the steps of:
- pushing along a first guide (16) according to a direction of advancement (18) said products (10) the main face (14) of which rests on said first guide (16), until they pass one by one into a seat (46) of a transfer device (20) located downstream of a terminal end of the first guide (16),
- rotating said transfer device (20), in order to transfer each product (10) from the seat (46) into a second guide (22) arranged downstream, so that a portion of the perimeter edge (12) of the product (10) rests on the second guide (22), and
- circulating trolleys (68a, 68b) along a closed loop stator (24) of a linear motor, which stator (24) has a length (64) located below said second guide (22), each trolley (68a, 68b) having a pin (74) protruding through a longitudinal slot (60) of a bottom wall (58) of the second guide (22), so that said trolleys (68a, 68b) act alternatively on their way along the length (64) as a front retainer and a rear pusher of a group (84) of products (10) on the second guide (22).

13. The method according to claim 11, comprising the steps of:
- pushing along a first guide (16) according to a direction of advancement (18) said products (10) a main face (14) of which rests on said first guide (16), until they fall, without changing lying configuration, on a second guide (22) located downstream of a terminal end of the first guide (16), and
- circulating trolleys (68b) along a closed loop stator (24) of a linear motor, which stator (24) has a length (64) located below the second guide (22), each trolley (68b) having a pin (74) protruding through a longitudinal slot (60) of a bottom wall (58) of the second guide (22), so that it acts on its way along the length (64) as a rear pusher of a vertical-axis stack (92) of products (10) on the second guide (22).

## Patentansprüche

1. Vorrichtung zum Bewegen und Gruppieren flacher Produkte (10) mit zwei Hauptflächen (14) und einem umlaufenden Rand (12), aufweisend:
- eine erste Führung (16), mit der eine Fördereinrichtung (20) verbunden ist, um die Produkte (10) entlang einer Transportrichtung (18) zu transportieren,
- eine Übergabevorrichtung (20), die einem Endstück der ersten Führung (16) nachgelagert angeordnet ist und verdrehbar um eine Achse (34) quer zur Transportrichtung (18) angebracht ist, wobei die Übergabevorrichtung (20) mit Drehantriebsmitteln versehen ist und mindestens einen Sitz (46) hat, der zum Aufnehmen eines der Produkte (10) geeignet ist, und
- eine zweite Führung (22), die der Übergabevorrichtung (20) nachgelagert angeordnet ist, mit einer Bodenwand (58) mit einem Längsschlitz (60), und dazu ausgelegt ist, die Produkte (10) aufzunehmen, sobald sie von der Übergabevorrichtung (20) abgeladen worden sind,
**dadurch gekennzeichnet, dass** die Vorrichtung weiter aufweist
- einen Linearmotor, der einen Stator (24) mit geschlossenem Kreislauf (24) mit einem Abschnitt (64), der unterhalb der zweiten Führung (22) angeordnet ist, aufweist und eine Mehrzahl von Wagen (68a, 68b), die unabhängig voneinander entlang dem Stator (24) beweglich sind, wobei die Wagen (68a, 68b) einen Stift (74) aufweisen, der durch den Längsschlitz (60) hindurchragt, wodurch Gruppen (84, 92) von Produkten (10) auf der zweiten Führung (22) geschaffen werden,
wobei die Übergabevorrichtung (20) wahlweise beweglich ist, so dass sie, wenn gewünscht, die Übergabe von Produkten (10) von der ersten Führung (16) an die zweite Führung (22) nicht beeinträchtigt.

2. Vorrichtung nach Anspruch 1, wobei die erste Führung (16) auf einem Niveau angeordnet ist, das höher ist als das Niveau der zweiten Führung (22), welche einen U-förmigen Querschnitt aufweist, der gebildet ist von der Bodenwand (58) mit dem Längsschlitz (60) und zwei zugewandten Seitenwänden (62), welche einen Längshohlraum begrenzen, der zur Aufnahme der Produkte (10) geeignet ist, sobald diese von der Übergabevorrichtung (20) abgeladen worden sind.

3. Vorrichtung nach einem der vorangehenden Ansprüche, wobei die Übergabevorrichtung (20) von zwei voneinander beabstandeten und parallelen Platten (36) gebildet ist, so dass sie einen dazwischenliegenden Spalt (38) definieren, der den Durchgang der Stifte (74) der Wagen (68a, 68b) ermöglicht, wobei jede Platte (36) einen zentralen Körper aufweist, der begrenzt ist von zwei geraden und parallelen Seiten (40), welche durch zwei gekrümmte Abschnitte (42) verbunden sind, die sich jeweils als Zahn (44) erstrecken, welcher zusammen mit einer der geraden Seiten (40) einen Sitz (46) begrenzt, der zum Unterbringen eines der Produkte (10) geeignet ist.

4. Vorrichtung nach Anspruch 3, wobei jeweils eine Antriebswelle (48), die durch einen entsprechenden Treibriemen (50) mit einer Abtriebswelle (52) eines einzigen Motors (54) verbunden ist, von einer Fläche jeder Platte (36) wegführt und dem Spalt (38) abgewandt ist.

5. Vorrichtung nach einem der vorangehenden Ansprüche, wobei die Übertragungsvorrichtung (20) verdrehbar um eine Achse (34) quer zur Transportrichtung (18) gelagert ist und von zwei Platten (36) gebildet ist, die voneinander beabstandet und parallel sind, so dass sie einen Spalt (38) definieren, wobei eine drehende Antriebswelle (48) von einer Fläche jeder dem Spalt (38) gegenüberliegenden Platte (36) wegführt und durch einen entsprechenden Treibriemen (50) mit einer Abtriebswelle (52) eines einzigen Motors (54), welche eine teleskopische Struktur hat, verbunden ist.

6. Vorrichtung nach Anspruch 5, wobei die Abtriebswelle (52) durch zwei untereinander verbundene Halbteile polygonalen Querschnitts gebildet ist, so dass sie, wenn gewünscht, verlängerbar ist.

7. Vorrichtung nach einem der vorangehenden Ansprüche, wobei die Übergabevorrichtung (20) zur Anpassung an Produkte (10) unterschiedlicher Größe mit Einstellmitteln zum Einstellen ihrer Positionierung zwischen den Führungen (16, 22) entlang einer horizontalen Achse orthogonal zur Transportrichtung (18) versehen ist.

8. Vorrichtung nach einem der vorangehenden Ansprüche, wobei die erste Führung (16) zur Überprüfung des Vorhandenseins der Produkte (10) mit einer Fotozelle (30) versehen ist.

9. Vorrichtung nach einem der vorangehenden Ansprüche, wobei die zweite Führung (22) mit einer zum Einstellen der gegenseitigen Positionierung der Produkte (10) einer Gruppe (84) geeigneten Einrichtung (86), bevorzugt einer flexiblen Schneide versehen ist.

10. Vorrichtung nach einem der vorangehenden Ansprüche, wobei jeder der Wagen (68a, 68b) einen Körper (70) mit einem Querschnitt in Form eines umgekehrten U aufweist, auf dessen einer Seite ein L-förmiges Element (72) angelenkt ist, welches einen vertikalen Arm, der durch den Stift (74) gebildet ist, und einen horizontalen Arm (76) aufweist, wobei das L-förmige Element (72) an einem Ende des horizontalen Arms (76) an den Körper (70) angelenkt ist.

11. Verfahren zum Bewegen und Gruppieren flacher Produkte (10) mit zwei Hauptflächen (14) und einem umlaufenden Rand (12), wobei das Verfahren die Verwendung einer Vorrichtung nach einem der vorangehenden Ansprüche umfasst.

12. Verfahren nach Anspruch 11, aufweisend die folgenden Schritte:
- Schieben der Produkte (10) entlang einer ersten Führung (16) gemäß einer Transportrichtung (18), wobei deren Hauptfläche (14) auf der ersten Führung (16) aufliegt, bis sie eines nach dem anderen einen Sitz (46) einer Übergabevorrichtung (20) passieren, welche einem Endstück der ersten Führung (16) nachgelagert angeordnet ist,
- Verdrehen der Übergabevorrichtung (20), um jedes Produkt (10) von dem Sitz (46) an eine nachgelagert angeordnete zweite Führung (22) zu übergeben, so dass ein Abschnitt des umlaufenden Rands (12) des Produkts (10) auf der zweiten Führung (22) aufliegt, und
- Umlaufwagen (68a, 68b) entlang eines Stators (24) mit geschlossenem Kreislauf (24) eines Linearmotors, wobei der Stator (24) einen Abschnitt (64) aufweist, der unterhalb der zweiten Führung (22) angeordnet ist, wobei jeder Wagen (68a, 68b) einen Stift (74) aufweist, der durch einen Längsschlitz (60) einer Bodenwand (58) der zweiten Führung (22) hindurchragt, so dass die Wagen (68a, 68b) auf ihrem Weg entlang des Abschnitts (64) alternativ als vordere Halterung und als hinterer Schieber einer Gruppe (84) von Produkten (10) auf der zweiten Führung (22) fungieren.

13. Verfahren nach Anspruch 11, aufweisend die folgenden Schritte:
- Schieben der Produkte (10) entlang einer ersten Führung (16) gemäß einer Transportrichtung (18), wobei deren Hauptfläche (14) auf der ersten Führung (16) aufliegt, bis sie, ohne Änderung der Liegekonfiguration, auf eine zweite Führung (22) fallen, die einem Endstück der ersten Führung (16) nachgelagert ist, und
- Umlaufwagen (68b) entlang eines Stators (24) mit geschlossenem Kreislauf (24) eines Linearmotors, wobei der Stator (24) einen Abschnitt (64) aufweist, der unterhalb der zweiten Führung (22) angeordnet ist, wobei jeder Wagen (68a, 68b) einen Stift (74) aufweist, der durch einen Längsschlitz (60) einer Bodenwand (58) der zweiten Führung (22) hindurchragt, so dass sie auf ihrem Weg entlang des Abschnitts (64) als hinterer Schieber eines Vertikal-Achsen-Stapels (92) von Produkten (10) auf der zweiten Führung (22) fungieren.

## Revendications

1. Appareil pour déplacer et regrouper des produits plats (10) présentant deux faces principales (14) et un bord périphérique (12), comprenant :
- un premier guidage (16), auquel un dispositif de transport (20) est associé, afin de faire avancer lesdits produits (10) le long d'une direction d'avance (18),
- un dispositif de transfert (20) situé en aval d'une extrémité terminale du premier guidage (16) et monté de manière rotative autour d'un axe (34) transversalement à ladite direction d'avance (18), ledit dispositif de transfert (20) étant doté de moyens d'entraînement en rotation et présentant au moins un siège (46) adapté pour loger un desdits produits (10), et
- un deuxième guidage (22) agencé en aval dudit dispositif de transfert (20), présentant une paroi inférieure (58) avec une fente longitudinale (60) et étant adapté pour recevoir lesdits produits (10), une fois déchargés du dispositif de transfert (20),
**caractérisé en ce que** l'appareil comprend en outre
- un moteur linéaire comportant un stator à boucle fermée (24) présentant une longueur (64) située sous le deuxième guidage (22), et une pluralité de chariots (68a, 68b) mobiles indépendamment les uns des autres le long du stator (24), lesdits chariots (68a, 68b) présentant un axe (74) qui fait saillie à travers ladite fente longitudinale (60), entraînant la formation de groupes (84, 92) de produits (10) sur ledit deuxième guidage (22),
dans lequel ledit dispositif de transfert (20) est sélectivement mobile de sorte à ne pas interférer, si souhaité, avec le transfert de produits (10) du premier guidage (16) au deuxième guidage (22).

2. Appareil selon la revendication 1, dans lequel ledit premier guidage (16) est situé à un niveau plus élevé que le niveau du deuxième guidage (22) qui présente une section transversale en U formée par la paroi inférieure (58) avec ladite fente longitudinale (60) et deux parois latérales avant (62) qui délimitent une cavité longitudinale adaptée pour recevoir lesdits produits (10), une fois déchargés du dispositif de transfert (20).

3. Appareil selon l'une quelconque des revendications précédentes, dans lequel ledit dispositif de transfert (20) est formé par deux plaques espacées et parallèles (36) de sorte à définir entre elles une fente (38) adaptée pour permettre le passage des axes (74) des chariots (68a, 68b), chaque plaque (36) présentant un corps central délimité par deux côtés droits et parallèles (40) qui sont joints par deux longueurs incurvées (42) s'étendant dans une dent respective (44) qui, conjointement avec un des côtés droits (40), délimite un siège (46) adapté pour loger un desdits produits (10).

4. Appareil selon la revendication 3, dans lequel un arbre d'entraînement (48) respectif, relié par une courroie de transmission (50) respective à un arbre de sortie (52) d'un seul moteur (54), s'écarte d'une face de chaque plaque (36) s'éloignant de ladite fente (38).

5. Appareil selon l'une quelconque des revendications précédentes, dans lequel ledit dispositif de transfert (20) est monté de manière rotative autour d'un axe (34) transversalement par rapport à la direction d'avance (18) et est formé par deux plaques (36) espacées et parallèles de sorte à définir une fente (38), un arbre d'entraînement rotatif (48) s'écartant d'une face de chaque plaque (36) opposée à la fente (38), relié par une courroie d'entraînement (50) respective à un arbre de sortie (52) d'un seul moteur (54), lequel arbre de sortie (52) présente une structure télescopique.

6. Appareil selon la revendication 5, dans lequel ledit arbre de sortie (52) est formé de deux demi-parties reliées entre elles présentant une section transversale polygonale de sorte que, si souhaité, elle puisse être étendue.

7. Appareil selon l'une quelconque des revendications précédentes, dans lequel ledit dispositif de transfert (20) est doté de moyens d'ajustement pour l'ajustement de son positionnement entre lesdits guidages (16, 22) le long d'un axe horizontal orthogonal à la direction d'avance (18) de sorte à s'adapter aux produits (10) de différentes tailles.

8. Appareil selon l'une quelconque des revendications précédentes, dans lequel ledit premier guidage (16) est associé à une photocellule (30) pour vérifier la présence desdits produits (10).

9. Appareil selon l'une quelconque des revendications précédentes, dans lequel ledit deuxième guidage (22) est associé à un dispositif (86), de préférence une lame flexible, adaptée pour ajuster le positionnement mutuel des produits (10) d'un groupe (84).

10. Appareil selon l'une quelconque des revendications précédentes, dans lequel chacun desdits chariots (68a, 68b) présente un corps (70) présentant une section transversale formée comme un U inversé, sur un côté duquel un élément en forme de L (72) est articulé, lequel présente un bras vertical constitué par ledit axe (74) et un bras horizontal (76), duquel une came (78) fait saillie transversalement, ledit élément en forme de L (72) étant articulé sur ledit corps (70) à une extrémité du bras horizontal (76).

11. Procédé pour déplacer et regrouper des produits plats (10) présentant deux faces principales (14) et un bord périphérique (12), qui implique l'utilisation d'un appareil selon l'une quelconque des revendications précédentes.

12. Procédé selon la revendication 11, comprenant les étapes consistant à :
- pousser le long d'un premier guidage (16) selon une direction d'avance (18) lesdits produits (10), dont la face principale (14) repose sur ledit premier guidage (16) jusqu'à ce qu'ils passent un par un dans un siège (46) d'un dispositif de transfert (20) situé en aval d'une extrémité terminale du premier guidage (16),
- entraîner en rotation ledit dispositif de transfert (20) afin de transférer chaque produit (10) du siège (46) dans un deuxième guidage (22) agencé en aval de sorte qu'une partie du bord périphérique (12) du produit (10) repose sur le deuxième guidage (22), et
- faire circuler des chariots (68a, 68b) le long d'un stator à boucle fermée (24) d'un moteur linéaire, lequel stator (24) présente une longueur (64) située sous ledit deuxième guidage (22), chaque chariot (68a, 68b) présentant un axe (74) faisant saillie à travers une fente longitudinale (60) d'une paroi inférieure (58) du deuxième guidage (22) de sorte que lesdits chariots (68a, 68b) agissent alternativement sur leur chemin sur la longueur (64) comme un élément de retenue avant et un poussoir arrière d'un groupe (84) de produits (10) sur le deuxième guidage (22).

13. Procédé selon la revendication 11, comprenant les étapes consistant à :
- pousser le long d'un premier guidage (16) selon une direction d'avance (18) lesdits produits (10), dont la face principale (14) repose sur ledit premier guidage (16) jusqu'à ce qu'ils tombent, sans changer de configuration horizontale, sur un deuxième guidage (22) situé en aval d'une extrémité terminale du premier guidage (16), et
- faire circuler des chariots (68b) le long d'un stator à boucle fermée (24) d'un moteur linéaire, lequel stator (24) présente une longueur (64) située sous ledit deuxième guidage (22), chaque chariot (68b) présentant un axe (74) faisant saillie à travers une fente longitudinale (60) d'une paroi inférieure (58) du deuxième guidage (22) de sorte qu'il agisse sur son chemin sur la longueur (64) comme un poussoir arrière d'une pile à axe vertical (92) de produits (10) sur le deuxième guidage (22).
